# EUROPEAN PATENT APPLICATION

(11) **EP 3 985 146 A1**
(43) Date of publication of application: **20.04.2022**
(21) Application number: 20202274.5
(22) Date of filing: 16.10.2020
(51) Int. Cl.: C25D 11/26, B82Y 40/00, C04B 35/626

(54) **METHOD FOR FUNCTIONALIZATION OF NANOSTRUCTURED FILMS DURING CRYSTALLIZATION**

(71) Applicant: Jozef Stefan Institute, 1000 Ljubljana (SI); Kemijski Institut, 1000 Ljubljana (SI)
(72) Inventor: Suhadolnik, Luka, 1000 Ljubljana (SI); Zagar Soderznik, Kristina, 1000 Ljubljana (SI); Kocen, Matej, 1000 Ljubljana (SI); Marinko, Ziva, 1000 Ljubljana (SI); Ceh, Miran, 1000 Ljubljana (SI); Bele, Marjan, 1000 Ljubljana (SI)
(74) Representative: Patentni Biro AF d.o.o.

(57) **Abstract**

The present invention belongs to the field of nanotechnology, more precisely to the field of nanostructures formed by manipulation of individual atoms, molecules, and to manufacturing processes for providing said nanostructures. The invention relates to a method for functionalization of nanostructured films during crystallization, the essence of which is application of external pressure during crystallization of synthesized nanostructured films. The contact pressure ensures modification of the surface of nanostructured films. The method thus comprises two steps:
a) synthesis of an immobilized amorphous nanostructured film by any suitable synthesis process, and
b) crystallization of the film obtained in step a) at elevated temperatures in the presence of the contact pressure, wherein various chemicals may also be used between the film and means providing the contact pressure. Said chemicals influence the chemical composition of the film obtained after step b).

## Description

### Field of the invention

The present invention belongs to the field of nanotechnology, more precisely to the field of nanostructures formed by manipulation of individual atoms, molecules, and to manufacturing processes for providing said nanostructures. The invention relates to a method for functionalization of nanostructured films during crystallization.

### Background of the invention and the technical problem

Various applications, such as synthesis of catalysts for lithium-ion batteries, wastewater treatment, electrolysers, and active components in sensors require immobilized nanostructured films. Immobilized films are far more suitable for use in industry, as nanostructured powders have several problems, such as agglomeration, replacement and regeneration of nanostructured particles, etc., wherein some applications such as electrolysers do not allow use of catalysts in powder form.

There are several methods for synthesis of immobilized nanostructured films (nanotubes, nanoparticles, etc.) on a conductive substrate, such as chemical vapour deposition (CVD), solvothermal synthesis, dip coating, but they have many disadvantages, including complexity, high price, length of the process, poor adhesion of the resulting film to the substrate, or a combination of these factors. In addition, none of the above-mentioned techniques allows simple production of an immobilized film with a thickness of several micrometres, as these thick films require longer preparation times, thus prolonging the process length as well as increasing the costs. Additionally, adhesion of the resulting film is often too low.

Similarly, immobilization of catalysts, synthesized in the form of powders as for example in the pyrolysis method, is demanding and time consuming as well, since the synthesized material does not yet constitute an electrode for sensors, catalysis or energy production and storage. Furthermore, the so-prepared immobilized powder shows no predominant orientation that could provide a shorter diffusion distance through the film.

Another possible method for synthesis of nanostructures is anodic oxidation of metals and alloys, which eliminates disadvantages of the above-mentioned methods, but does not allow the synthesis of nanostructures with a heterogeneous morphology and chemical composition, as well as thin films in the form of nanoparticles.

Hence, the technical problem solved by the present invention is provision of a method for functionalizing an immobilized nanostructured film prepared by any synthesis process, so that a change of film morphology and/or chemical composition is achievable in a simple and low-cost manner.

### State of the art

The current state of the art comprises a wide variety of synthetic processes for the preparation of immobilized, nanostructured materials, among which ceramic materials such as silica, titania, and alumina are very important and widespread.

Alivov and Fan (2009; doi 10.1021/jp905174x and doi: 10.1088/0957-4484/20/40/405610) describe a method of thermal annealing of titanium dioxide (TiO₂) nanotube arrays in fluorine ambient on a glass plate at 500 °C for 30 min with a ramping rate of 16 °C/min, during which transformation of nanotubes to nanoparticles occurred where TiO₂ film was facing the glass plate. The size of the formed TiO₂ nanoparticles depended on the fluorine concentration and could be controlled from 20 to 500 nm. This method only focuses on the transformation of TiO₂ nanotubes to nanoparticles, but it does not allow any modification of the chemical composition or lead to heterogeneity in morphology.

Gao et al. (doi: 10.1021/acs.cgd.8b01604) describe the transformation of amorphous TiO₂ nanotubes into TiO₂ nanocrystals with an anatase structure. The essence of their procedure is rapid-heating, wherein amorphous films are put in a heated muffle furnace. Although the described procedure requires a very short synthesis time, it does not allow setting of a large number of parameters and thus controlled changes of the film morphology. Hence, this method does not allow preparation of films with arbitrary properties with regards to the required application.

Other processes that make it possible to change the morphology and the chemical composition of nanostructured films are mainly used for film synthesis and are not specialized procedures for the controlled modification or functionalization of immobilized films. However, they differ significantly from the present invention.

Liu et al., 2014 (doi: 10.1016/j.apsusc.2013.10.034) disclose a solvothermal method, which is used for the synthesis and also for the post treatment of immobilized nanostructured films. It enables the production of a few compositions and morphologies of nanostructured films. The problem with this procedure is that it does not allow a simple modification of the morphology and composition of thin films. It was used with the purpose of increasing the specific surface area of immobilized films, in which case the adhesion of the surface nanoparticles was relatively low. This resulted in the elimination of immobilized nanoparticles from the supporting film during the use of such a catalyst (Krivec, et al., 2013, doi: 10.1021/am402389t). The change in morphology was achieved by the addition of nanoparticles to the surface rather than by a modification of the morphology of the original nanostructured film. It is also possible to use the solvothermal method for the incorporation of different elements (e.g., strontium and silicon (Huang et al., 2018, doi: 10.2147/IJN.S147969) into the nanostructured films or to change the chemical composition of the immobilized films (Zhang et al., 2016, doi: 10.1016/j.jmst.2016.06.007). Another process that is used only for the synthesis of immobilized films is anodic oxidation (M., Hiroaki, & Patrik, 2005, doi: 10.1002/anie.200462459). The result of anodic oxidation is, in most cases, a rigidly attached amorphous film, which must be converted to a crystalline film using the calcination (i.e. crystallization) process. Patent application CN109030594A describes changing titanium dioxide nanotube arrays into silver bismuthate-silver-titanium dioxide nanotube arrays. The changes in the film's composition are made after the calcination of titanium dioxide nanotubes and not during the crystallization process. More specifically, crystallized TiO₂ nanotube arrays prepared with anodic oxidation are placed in the bismuth nitrate and silver nitrate solution followed by placing the film into potassium hydroxide solution.

Patent application US20150233010A1 discloses a method for the preparation of iron-impregnated, nanostructured, carbon-modified, titanium-based electrodes using an iron-based catalyst to treat the TiO₂, which was then heated at elevated temperatures between 800 and 1000 °C at constant supply of gas such as hydrocarbon gas.

### Description of the solution of the technical problem

The present invention is based on a change of the nanostructured film at elevated temperature, at which crystallization can also take place. Crystallization of the nanostructured films is a well-known process; however, all parameters that strongly influence the composition and morphology of nanostructured films during the change from an amorphous to a crystalline structure have not yet been identified.

The essence of the present invention is that during crystallization of synthesized nanostructured films external pressure is applied in addition to elevated temperatures, which are needed for crystallization. Application of external pressure has never been proposed before in order to increase the specific surface of the film and, most importantly, to functionalize or modify the surface of nanostructured films. On the contrary, it has been used in the preparation of an anode for dye-sensitized solar cells using thermal compression of a polymer and metal oxide precursor (patent US9368287B2), where pressure was used for melting the polymer and crushing of ultrafine composite fibres.

The solution of the technical problem is carried out as defined in the claims, wherein the dependent claims relate to the preferred embodiments of the invention.

Furthermore, the morphology and the chemical composition of the nanostructured films may be additionally influenced by adding various chemicals for doping. The starting nanostructured film may be prepared by any suitable synthesis process, most preferably by anodic oxidation, hydrothermal synthesis, sol-gel method, spin coating, electrophoretic deposition, etc. As such, the new process allows the properties of immobilized, nanostructured films to be varied in a controlled manner.

The method for functionalization of nanostructured films according to the invention thus comprises two steps:
a) synthesis of an immobilized amorphous nanostructured film by any suitable synthesis process, and
b) crystallization of the film obtained in step a) at elevated temperatures above 100 °C, preferably above 200 °C, in the presence of a contact pressure, wherein various chemicals may also be used between the film and means providing the contact pressure.

The contact pressure is applied in any suitable way, for example as a line, as a point pressure, structured surface pressure or flat surface pressure. Combination of said variants is also possible in case further heterogeneity is required. The pressure applied can be in the range from 0.0001 MPa to 10,000 MPa, preferably from 0.001 MPa to at least 100 MPa. The pressure is applied as a load, i.e. solid mass pressing on the film, preferably with a system that enables the application of contact pressure to the film, wherein the system optionally enables pressure variation during the process of crystallization of the film. In the framework of the experiments carried out, it has been found that application of the pressure in the form of a load is an essential part of the invention. Applying pressure in the form of increased gas pressure does not lead to the same results. The said solid mass used to provide the pressure can be of any suitable material, wherein its chemical composition may also slightly affect the final chemical composition of the obtained immobilized and crystallized nanostructured film. Usually the selected material is heavy, resistant to high temperatures and optionally inert, if minor changes in the chemical composition of nanostructured films are not desired. Most commonly Al₂O₃ or W discs or blocks are used.

Further main parameters that affect the functionalization of immobilized nanostructured films are:
- atmosphere, for example air, vacuum, nitrogen, oxygen, argon or hydrogen atmosphere, usually air or oxygen atmosphere;
- temperature, which usually depends on the material for the nanostructured films, but usually ranges from 200 °C to 900 °C, for TiO₂ usually between 400 °C and 750 °C;
- time from 10 minutes to 24 hours or even more if the temperature is lower than 200 °C, preferably from 30 minutes to 3 hours, as well as heating and cooling rate, which are usually from 1 °C/min to 100 °C/min;
- the choice of material of the load used for ensuring pressure, which is in contact with the nanostructured film synthesized in the first step, for example metal, graphite, various materials in nano or bulk form;
- the amount, chemical composition, and form of chemical that can be put between the nanostructured film and the material placed on the top surface of the nanostructured film. The chemicals may be any suitable known to the person skilled in the art, which allow change in crystallization, such as acetates, chlorides, fluorides, etc. However, oxides do appear to be less suitable or unfavourable. Usually, the chemicals are applied in the form of a powder in a thin layer. For example, lithium fluoride may be applied between the film and the material that is in contact with the film,
- Also, solids may be used to cause minor changes in the chemical composition of the film, for example metal foil or a graphite film. Use of a graphite film or other solids seals the film, causing the fluorine that enters the film during the anodic oxidation process to remain in the structure even after crystallization, which otherwise does not occur.

The thickness of the film prepared by the above described method is up to 20 micrometres, wherein the chosen synthesis process can influence the thickness. In anodic oxidation process the thickness of the film may be affected by changing the time and voltage of anodization. The optimal thickness of the film depends on the intended use, which is obvious to the person skilled in the art.

The first step may be performed in any suitable way in any suitable device, while the second step of the method according to the invention is preferably carried out in any furnace, in which sufficient space is available above the nanostructured film to allow the application of contact pressure to the film and to optionally add a chemical for modification of the film composition. The furnace may be, for example, a spark plasma sintering device (SPS). Crystallization can also be carried out in a muffle furnace, where a thermally stable material with the desired mass is placed on the sample.

The preferred furnace for performing the above-described methods comprises the following components:
- an insulated housing comprising;
   ∘ a surface for placement of the synthesized film to be functionalized with the method according to the invention,
   ∘ at least one heating element for adjusting the temperature inside the housing;
   ∘ a system that enables the application of contact pressure to the film, the pressure range being from 0.0001 MPa to 10000 MPa, and optionally pressure variation, the system comprising at least a suitable load for contacting the film, attachment of the load to the housing, means for ensuring movement of the load and connection between the load and its attachment, which allows movement of the load towards the film, and
   ∘ a system for regulation of atmosphere inside the housing.

Additionally, it is preferred that the operation of the furnace is computer-controlled with a suitable program, which controls the pressure applied onto the film and other parameters. Usually, the computer program will control the means for movement of the load as well as its weight or pressure onto the surface with the film.

The advantages of the method for the preparation of immobilized nanostructured films according to the invention include, among other things, the simplicity of the process, low price, short production time, great possibilities for changing the processing parameters and thus the properties of the resulting film, and the possibility of running the process continuously in an automated manner.

The invention also relates to the nanostructured films prepared by the above described methods and the use of the so-prepared films in various applications, such as synthesis of catalysts for lithium-ion batteries, wastewater treatment, electrolysers, and active components in sensors.

One of the aims of the invention is also production of immobilized nanostructured films with different (heterogeneous) structures on the film surface, in order to allow several different functions of the film, for example one part is suitable for one reaction step or type, the other for another reaction type or step etc. In this way one nanostructured film may allow different steps of a reaction, thus creating a cascade system. This can be achieved by applying different types and values of pressure as well as different optional chemicals arranged on the surface of the amorphous film before crystallization. The combinations depend on the intended use and are clear to the person skilled in the art based on the above described method according to the invention.

The invention will be further disclosed and described based on exemplary embodiments, examples and figures, which show:
- Figure 1: A block diagram showing possible steps and parameters of the method according to the invention
- Figure 2: Schematic presentation of the method comprising anodic oxidation or any other synthesis method for the preparation of immobilized nanostructured films that are post treated in order to transform their morphology and change their chemical composition during crystallization in the presence of physical pressure and chemicals. Different types of pressure are presented in the figure: flat, linear and point
- Figure 3: SEM micrograph of the top surface of immobilized TiO₂ nanotubes (a) that were transformed to nanoparticulate crystalline TiO₂ film with calcination using SPS (b) or to nanoparticulate mixture of anatase TiO₂, ZnO, TiOF and ZnTiO₃ with modification with Zn acetate during annealing with the application of contact pressure (c).
- Figure 4: XRD spectra of amorphous TiO₂ nanotubular film and crystalline TiO₂ nanoparticulate film that was prepared with annealing of TiO₂ nanotubes at 450 °C for 1 h and the application of contact pressure
- Figure 5: XRD spectra of nanoparticulate mixture of anatase TiO₂, ZnO, TiOF and ZnTiO₃ prepared with modification of anodized TiO₂ nanotubular film with Zn acetate during annealing with the application of contact pressure
- Figure 6: SEM micrograph of the top surface of immobilized vanadium oxide nanoparticles prepared with anodic oxidation (a) which transformed into vanadium oxide nanoplates during annealing at 500 °C for 3 h and the application of contact pressure (b).
- Figure 7: XRD spectra of crystalline vanadium oxide (V₂O₅ and VO₂ are the main structures) film consisting of nanoplates that was prepared with annealing at 500 °C for 3 h and the application of contact pressure

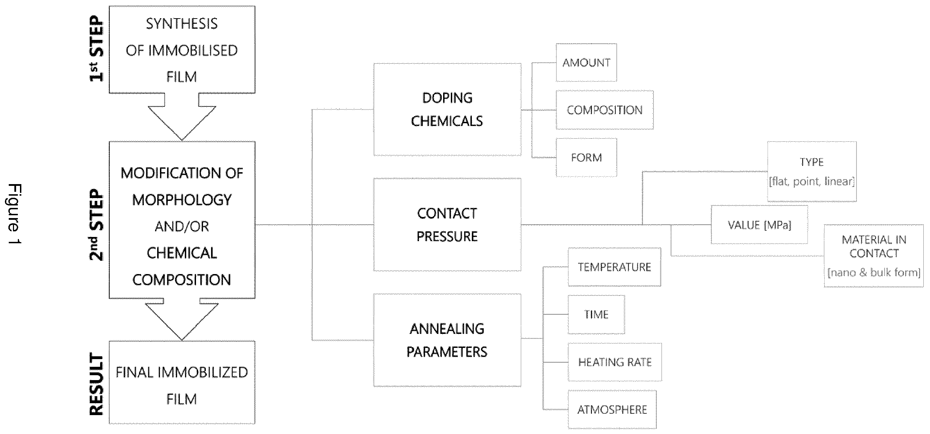

Figure 1 shows the scheme of the method according to the invention, wherein the pressure and elevated temperature (annealing) are always used, while addition of chemicals for doping the nanostructured films is optional. The method thus comprises two steps:
a) synthesis of an immobilized amorphous nanostructured film by any suitable synthesis process, and
b) crystallization of the film obtained in step a) at elevated temperatures in the presence of the contact pressure, wherein various chemicals may also be used between the film and means providing the contact pressure. Said chemicals influence the chemical composition of the film obtained after step b).

The scheme shows also possible parameters that influence the final film morphology and chemical composition, which have been disclosed above.

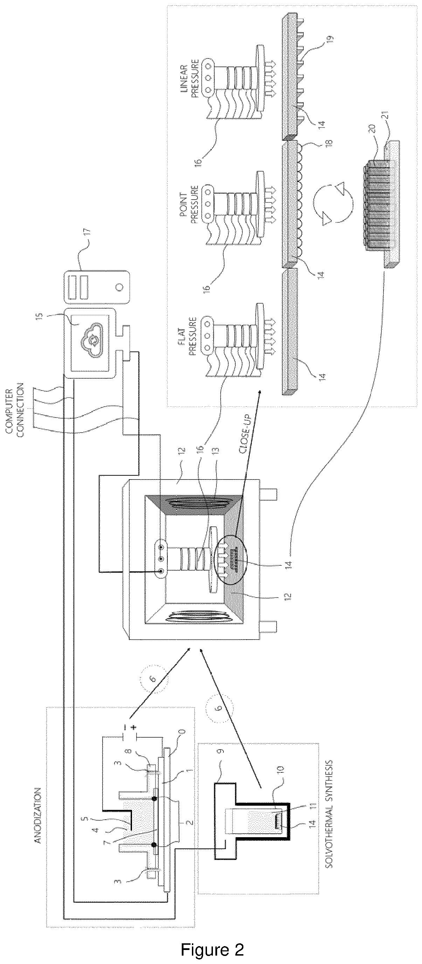

The scheme in Figure 2 shows the preferred embodiment, in which anodic oxidation and solvothermal treatment are used in the first step of the method, wherein this figure also shows a possible embodiment of the furnace and examples of applied contact pressures. Figure 2 shows use of two different methods for the step a), which is synthesis. The preferred choices for this step are anodic oxidation and solvothermal synthesis, which are performed according to known protocols.

Anodic oxidation is usually performed in a device having a base plate 0, a Cu plate 1, an O-ring 2, each placed one above the other, wherein Teflon cells 8 are provided on top of the Cu plate 1 and secured with screws 3. Inside the Teflon cells 8 a metal part 7, electrolyte 4 and Pt cathode 5 are provided. The nanostructured film grows on the metal part when a voltage of 1 V to 200 V is applied between the anode (metal part) and the cathode. The time of the anodic oxidation can be between 15 minutes and 24 hours.

The solvothermal synthesis is performed in a suitable device such as an autoclave 9, inside which a Teflon cup 10 filled with solvent 11 is provided, wherein an immobilized nanostructured film 14 is located in the bottom of the cup 10.

Starting from any of the said synthesis methods, possibly controlled with a computer 17 connected to cloud storage 15, the film is thermally treated in a suitable furnace, such as a muffle furnace 12 with heating elements 13 provided on both sides of the inner chamber of the furnace. The film 14, more specifically a nanotubular film 20, is placed on a suitable surface, such as a metal plate 21, below a press 16, which can apply a flat, point or linear pressure to the film as shown in the close-up part of figure 2. The press is suitably shaped to allow said types of pressures and is provided with means for ensuring required weight and means for movement towards the film.

The preferred embodiment of the present invention is that the method is carried out in the following way:
a) the anodic oxidation process of titanium was used for the preparation of TiO₂ nanotubes. The time of the anodic was 30 minutes. The composition of the anodization electrolyte was ethylene glycol, 2 % (V/Vₜₒₜₐₗ) deionized water, and 3 % (w/wₜₒₜₐₗ) NH₄F.
b) After anodic oxidation, the TiO₂ nanotube film was thermally treated at 450 °C inside an SPS apparatus. The annealing time at the final temperature was 10 minutes. The heating and cooling time was 18 minutes.
c) During the crystallization, the film was exposed to a contact pressure of 20 MPa, the material in contact with the sample was W in the form of a foil and the atmosphere was a vacuum.

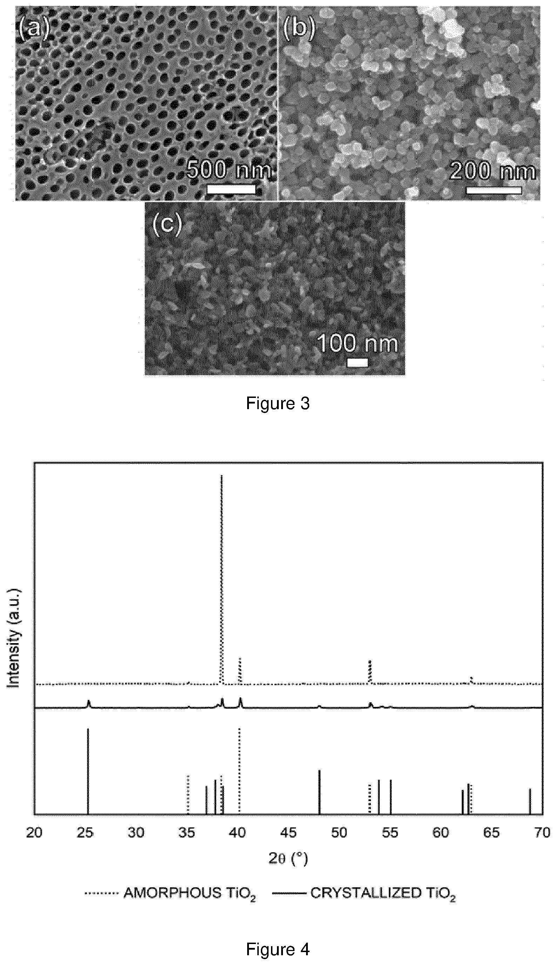

The film obtained after step a) is shown in figure 3a, while the film obtained after steps b) and c) is shown in figure 3b. The film shown in figure 3c has been obtained in the same way as above, only that Zn acetate was added to the film during annealing in combination with contact pressure. Addition of a chemical is important as it influences the chemical composition of the prepared film (e.g. using Zn acetate introduces a small amount of Zn in the sample, see Table 2).

The film prepared according to the method used for preparation of films shown in figure 3b had the following chemical composition:

**Table 1. Composition of sample anodized at 60V for 30min and annealed in SPS at 450 °C for 10 minutes and application of contact pressure of 3.5 kN**

| **EDX** [at. %] | | | |
|---|---|---|---|
| **O** | **F** | **Ti** | **W** |
| 36.92 | 7.22 | 55.30 | 0.56 |

The film prepared according to the method used for preparation of films shown in figure 3c had the following chemical composition:

**Table 2. Composition of anodized titanium (60 V/3 h) annealed at 450 °C for 1h with application of contact pressure and modification during annealing with zinc acetate**

| **EDX** [at. %] | | | |
|---|---|---|---|
| **O** | **F** | **Ti** | **Zn** |
| 52.42 | 11.25 | 23.58 | 12.74 |

Figure 4 shows XRD spectra of amorphous TiO₂ nanotubular film and crystalline TiO₂ nanoparticulate film that was prepared with annealing of TiO₂ nanotubes at 450 °C for 1 h and the application of contact pressure according to the above described preferred method. The films are shown in figure 3b. After crystallization, the film is composed of anatase TiO₂ (Figure 4) and can be directly used in various applications, for example for decomposing organic pollutants by the photocatalysis process.

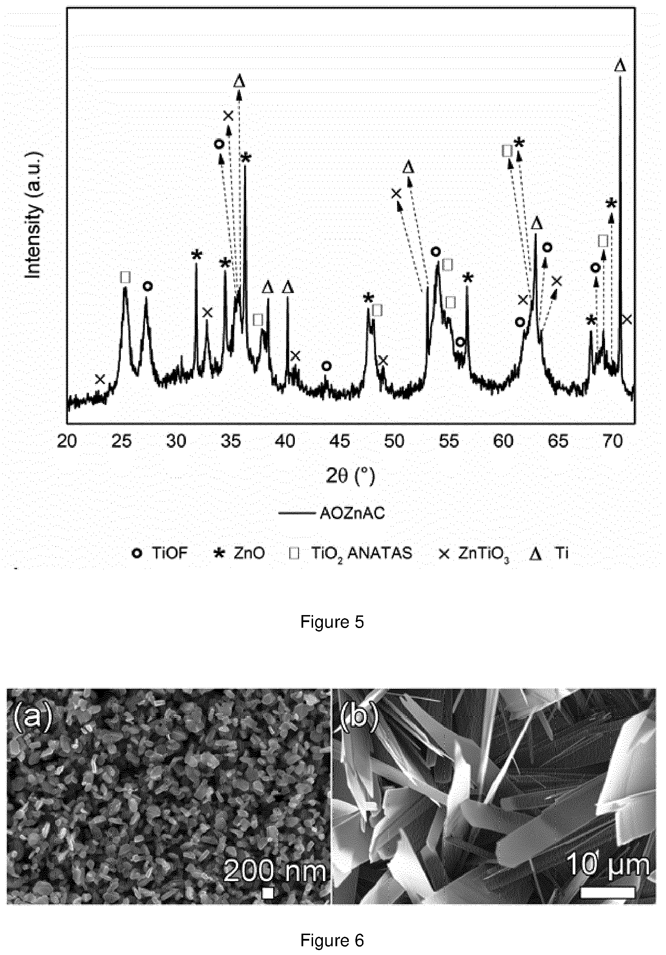

Figure 5 shows XRD spectra of nanoparticulate mixture of anatase TiO₂, ZnO, TiOF and ZnTiO₃ prepared with modification of anodized TiO₂ nanotubular film with Zn acetate (shown in figure 3c) during annealing with the application of contact pressure prepared by the preferred method as described above.

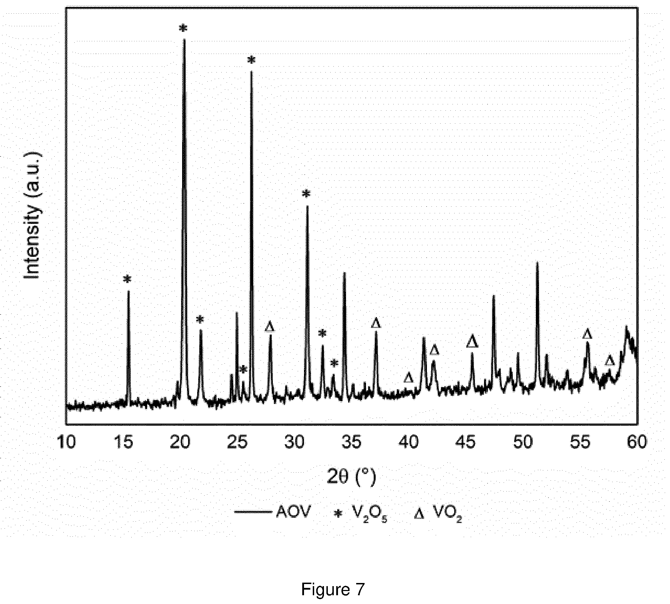

Figure 6 shows a SEM micrograph of the top surface of immobilized vanadium oxide nanoparticles prepared with anodic oxidation (a), which transformed into vanadium oxide nanoplates during annealing at 500 °C for 3 h in a muffle furnace and the application of contact pressure (b). Figure 7 shows XRD spectra of crystalline vanadium oxide (V₂O₅ and VO₂ are the main structures) of the film consisting of nanoplates shown in figure 6b.

The film prepared according to the method used for preparation of films shown in figure 6b had the following chemical composition:

**Table 3. Composition of anodized vanadium after annealing at 500 °C/3 h with the application of contact pressure**

| **EDX** [at. %] | |
|---|---|
| **O** | **V** |
| 46.85 | 53.15 |

Within the scope of the invention as described herein and defined in the claims, other embodiments of the method according to the invention that are clear to person skilled in the art may be possible, which does not limit the essence of the invention as described herein and defined in the claims.

## Claims

1. A method for functionalization of nanostructured films during crystallization, the method comprising the following steps:
a) synthesis of an immobilized amorphous nanostructured film by any suitable synthesis process, and
b) crystallization of the film obtained in step a) at elevated temperatures above 100 °C in the presence of a contact pressure provided by a solid mass pressing onto the film.

2. The method according to claim 1, wherein the contact pressure is applied in any suitable way, for example as a line, as a point pressure, structured surface pressure or flat surface pressure, or a combination of said variants for ensuring higher heterogeneity of the film surface.

3. The method according to claim 1 or claim 2, wherein the applied pressure is in the range from 0.0001 MPa to 10000 MPa, preferably from 0.001 MPa to at least 100 MPa.

4. The method according to any of the preceding claims, wherein the said solid mass is made of any suitable material, which is preferably heavy, resistant to high temperatures and optionally inert, for example metal, graphite, various materials in nano or bulk form, most preferably the solid mass is in the form of Al₂O₃ or W discs or blocks.

5. The method according to any of the preceding claims, wherein the morphology and the chemical composition of the nanostructured films may be additionally influenced by adding at least one chemical for doping between the film and the solid mass load.

6. The method according to the preceding claim, wherein the amount, chemical composition, and form of the doping chemical is selected based on required film characteristics, preferably acetates, chlorides, fluorides, and similar compounds are used, which are preferably applied in the form of a powder in a thin layer.

7. The method according to any of the preceding claims, wherein the method is performed under additional conditions that affect the functionalization of immobilized nanostructured films:
- atmosphere, for example air, vacuum, nitrogen, oxygen, argon or hydrogen atmosphere, usually air or oxygen atmosphere;
- temperature, which usually depends on the material for the nanostructured films, but usually ranges from 200 °C to 900 °C, for TiO₂ usually between 400 °C and 750 °C;
- time from 10 minutes to 24 hours or even more if the temperature is lower than 200 °C, preferably from 30 minutes to 3 hours, and/or
- heating and cooling rate usually ranging from 1 °C/min to 100 °C/min.

8. The method according to any of the preceding claims, wherein the amorphous nanostructured film obtained in step a) is prepared by any suitable synthesis process, most preferably by anodic oxidation, hydrothermal synthesis, sol-gel method, spin coating, or electrophoretic deposition.

9. The method according to any of the preceding claims, wherein the first step of the method may be performed in any suitable device for the selected synthesis process, while the second step of the method is preferably carried out in any furnace, in which sufficient space is available above the nanostructured film to allow the application of contact pressure to the film and to optionally add a chemical for modification of the film composition.

10. The method according to the preceding claim, wherein the second step is carried out in a furnace of a spark plasma sintering device (SPS) or a muffle furnace.

11. A functionalized nanostructured film prepared by the method according to any of the preceding claims.

12. The functionalized nanostructure film according to the preceding claim, wherein the film has different structures on its surface, in order to allow several different functions of the film, which is achieved by applying different types and values of pressure as well as different optional doping chemicals arranged on the surface of the amorphous film before crystallization.

13. Use of the film according to claim 11 or 12 in various applications, such as synthesis of catalysts for lithium-ion batteries, wastewater treatment, electrolysers, and active components in sensors.

14. A furnace for performing the method according to any claim from 1 to X, the furnace comprising the following components:
- an insulated housing comprising;
∘ a surface for placement of the synthesized film to be functionalized with the method according to the invention,
∘ at least one heating element for adjusting the temperature inside the housing;
∘ a system that enables the application of contact pressure to the film, the pressure range being from 0.0001 MPa to 10000 MPa, and optionally pressure variation, the system comprising at least a suitable load for contacting the film, attachment of the load to the housing, means for ensuring movement of the load and connection between the load and its attachment, which allows movement of the load towards the film, and
∘ a system for regulation of atmosphere inside the housing.

15. The furnace according to the preceding claim, wherein operation of the furnace is computer-controlled with a suitable program, which controls the pressure applied onto the film, means for movement of the load as well as its weight or pressure onto the surface with the film.
